# EUROPÄISCHE PATENTSCHRIFT

(11) **EP 3 762 636 B1**
(45) Veröffentlichungstag und Bekanntmachung des Hinweises auf die Patenterteilung: **05.11.2025**
(21) Anmeldenummer: 19710346.8
(22) Anmeldetag: 04.03.2019
(51) Int. Cl.: F16J 1/16, F02F 3/00, F02F 3/02, F02F 3/20

(54) **KOLBEN FÜR EINEN VERBRENNUNGSMOTOR**
PISTON FOR AN INTERNAL COMBUSTION ENGINE
PISTON POUR UN MOTEUR À COMBUSTION INTERNE

(30) Priorität: 05.03.2018 DE 102018203226
(43) Veröffentlichungstag der Anmeldung: 13.01.2021
(73) Patentinhaber: Federal-Mogul Nürnberg GmbH, 90441 Nürnberg (DE)
(72) Erfinder: SCHERER, Michael, 90765 Fürth (DE); SCHMOLL, Christoffer, 90449 Nürnberg (DE); RÖCK, Kilian, 90409 Nürnberg (DE)
(74) Vertreter: Hoffmann Eitle
(86) Internationale Anmeldenummer: PCT/EP2019/055283
(87) Internationale Veröffentlichungsnummer: WO 2019/170589

(56) Entgegenhaltungen:
- DE-A1- 102012 203 570
- JP-A- 2012 122 384
- JP-A- 2016 128 663
- JP-A- H09 242 603
- JP-U- H0 392 544

## Beschreibung

### Technisches Gebiet

Die Erfindung betrifft einen Kolben für einen Verbrennungsmotor.

Kolben von Verbrennungsmotoren weisen zum Einen diametral gegenüberliegende Schaftwände auf, bei denen es sich um Teile von Zylindermantelflächen handelt, die im Betrieb entlang der Zylinderbohrung oder einer hierin eingesetzten Zylinderlaufbuchse gleiten. In einem, in Richtung der Kolbenhubachse betrachtet inneren Bereich sind ferner Kolbenbolzennaben vorgesehen, die der Aufnahme eines Kolbenbolzens dienen, mittels dessen der Kolben mit einem Pleuel verbunden ist. Die Verbindungen zwischen den Schaftwänden und den Kolbenbolzennaben werden Schaftanbindungen, Verbindungs- oder Kastenwände genannt. Typischerweise sind vier derartige Kastenwände, zwei zur Anbindung der Schaftwand auf der Druckseite und zwei zur Anbindung der Schaftwand auf der Gegendruckseite vorgesehen.

Insbesondere die druckseitigen Kastenwände sind hohen mechanischen Belastungen ausgesetzt, da im Arbeitshub durch den Gasdruck auf den Kolbenboden und die Schrägstellung des Pleuels eine horizontale Seitenkraft wirkt, welche die druckseitige Schaftwand gegen die Zylinderwand drückt. Diese Seitenkraft wird durch die Kastenwände von der Kolbenbolzennabe auf die Schaftwand übertragen. Dies führt zu hohen Druckspannungen auf der Innenseite, also der zur Kolbenhubachse gerichteten Seite der Kastenwände.

Ferner ist der sog. Anlagewechsel zu beachten, wenn nämlich im oberen Totpunkt die Seitenkraft von der Gegendruck- zur Druckseite wechselt. In diesem Zusammenhang wechselt auch der Kontakt zwischen Zylinderbohrung und Schaftwänden des Kolbens von der Gegendruck- zur Druckseite. Auch im Verlauf dieses Anlagewechsels entstehen auf der Innenseite der Schaftwände, insbesondere am unteren Rand, dem sog. offenen Schaftende, hohe Druckspannungen. Eine unzureichende Festigkeit kann zu Rissen am offenen Schaftende führen, bei denen es sich um einen der häufigsten Schadensfälle bei Ottomotorkolben handelt.

### Stand der Technik

Um dem entgegenzuwirken, ist es beispielsweise aus der DE 10 2009 032 379 A1 bekannt, die Schaftanbindungen insbesondere an der Innenseite weitgehend gerade auszubilden und, in einer Unteransicht, ausgehend von der Kolbenbolzennabe nach innen zu neigen. Mit anderen Worten verkleinert sich ausgehend von der Kolbenbolzennabe der Abstand der Kastenwand zu einer gedachten Ebene senkrecht zur Kolbenbolzenachse. Eine ähnliche Gestaltung ist aus der DE 10 2012 203 570 A1 bekannt.

Bei der Gestaltung der Schaftanbindungen sind jedoch weitere Randbedingungen zu beachten, insbesondere die Länge des Kolbenbolzens und die Position einer Öldüse zum Spritzen von Kühlöl in einen Kühlkanal oder an eine Unterseite des Kolbens. Insbesondere würde der oben beschriebene, nach innen geneigte und gerade Verlauf der Kastenwände zu vergleichsweise weit außen liegenden Kolbenbolzennaben führen, was das Kolbengewicht erhöht und Anpassungen des Kolbenbolzens erforderlich macht. Dieser Konflikt wird beispielsweise gemäß der DE 10 2013 214 738 A1, DE 41 09 160 A1, US 6,279,456 B1 und JP 56-40706 B2 durch insgesamt gekrümmte Schaftanbindungen gelöst. Hierdurch wird zwar Raum für eine Kühlöldüse geschaffen, ohne dass die Kolbenbolzennaben nach außen verlegt werden müssen. Derartige Gestaltungen sind jedoch im Hinblick auf die Festigkeit nachteilig. Dies gilt gleichermaßen für die ähnlichen Gestaltungen mit ausgehend von der Kolbenbolzennabe zunächst nach außen geneigt, dann nach innen gekrümmt und dann nach innen geneigt verlaufenden Kastenwänden, wie sie in JP H 03-92544 U, JP 2012-122384 A, JP 2016-128663 A und JP H 09-242603 A gezeigt sind.

Schließlich geht aus der DE 10 2009 045 437 A1 ein Kolben mit nicht näher beschriebenen Verbindungswänden mit einer Aussparung für eine Kühlöldüse hervor.

### Darstellung der Erfindung

Vor diesem Hintergrund liegt der Erfindung die Aufgabe zugrunde, einen im Hinblick auf die Kombination von Festigkeit und Gestaltungsfreiheit im Hinblick auf die Position einer Kühlöldüse und/oder der Bolzennaben optimierten Kolben zu schaffen.

Die Lösung dieser Aufgabe erfolgt durch den im Patentanspruch beschriebenen Kolben.

Demzufolge weist dieser zumindest eine Kastenwand auf einer Druckseite auf, die zumindest am unteren Rand und zumindest an der Innenseite von der Kolbenbolzennabe ausgehend in einem ersten Abschnitt weitgehend gerade nach außen geneigt, anschließend nach innen gekrümmt und dann in einem zweiten Abschnitt zu der Schaftwand weitgehend gerade nach innen geneigt verläuft. Mit anderen Worten vergrößert sich in einer Unteransicht entlang der Kolbenhubachse betrachtet, ausgehend von der Kolbenbolzennabe zunächst der Abstand der Innenseite der Kastenwand zu einer gedachten Ebene senkrecht zur Kolbenbolzennabe, welche die Kolbenhubachse enthält. Hieran schließt sich eine vergleichsweise kurze Krümmung an, welche den beschriebenen ersten Abschnitt tangentenstetig mit einem zweiten Abschnitt verbindet, der nach innen geneigt verläuft, so dass sich der Abstand zu der oben erwähnten Ebene verringert. In dem zuletzt genannten Bereich kann somit die unter Festigkeitsgesichtspunkten ideale Gestaltung vorgenommen werden, die zu sehr gleichmäßig und homogen verteilten Druckspannungen führt, so dass die Gefahr von Rissbildung deutlich reduziert ist. Lediglich im Bereich der beschriebenen Krümmung tritt eine geringe lokale Spannungskonzentration auf. Der von der Kolbenbolzennabe ausgehend nach außen geneigte, gerade erste Abschnitt schafft darüber hinaus den für eine Kühlöldüse erforderlichen Raum, ohne dass die Kolbenbolzennaben in nachteiliger Weise nach außen gerückt werden müssen.

Im Hinblick auf die Festigkeit konnte festgestellt werden, dass verglichen mit einer geraden, nicht geneigten Schaftanbindung, mittels welcher der gleiche Abstand zu einer Öldüse erreicht werden kann, die Festigkeit bei der erfindungsgemäßen Gestaltung um etwa 16% höher ist. Eine verbesserte Festigkeit ergibt sich ferner gegenüber einer insgesamt gekrümmten Gestaltung der Schaftanbindungen. Gleichzeitig können bestehende Fertigungsmethoden angewendet werden, und das Kolbengewicht sowie die Schaftnachgiebigkeit, die Reibverluste und Geräusche bestimmt, werden nicht negativ beeinflusst.

Insbesondere im Hinblick auf die Festigkeit werden gute Ergebnisse für eine Neigung des zweiten Abschnitts bezüglich einer Ebene senkrecht zur Kolbenbolzenachse im Bereich von 10° bis 25°, insbesondere 15° bis 20° und besonders bevorzugt bei etwa 18° erwartet.

Den Anforderungen wird ferner besonders gut dadurch genüge getan, dass der zweite Abschnitt länger ausgebildet ist als der erste, insbesondere 2,0 bis 3,0 und besonders bevorzugt 2,3 bis 2,7 mal und insbesondere etwa 2,5 mal so lang. Als Beginn des ersten Abschnitts wird hierbei eine auf der Seite der betrachteten Kastenwand liegende Randlinie der Innenfläche der Kolbenbolzenbohrung, projiziert auf eine Ebene senkrecht zur Kolbenachse betrachtet. Das Ende des ersten Abschnitts wird durch den Beginn der Krümmung gebildet. Der zweite Abschnitt reicht vom Ende der Krümmung bis zu der äußeren Oberfläche der Schaftwand.

Bevorzugte Weiterbildungen des erfindungsgemäßen Kolbens sind in den weiteren Ansprüchen beschrieben.

Bei ersten Simulationen hat sich herausgestellt, dass die oben beschriebenen Anforderungen besonders gut erfüllt werden können, wenn die Neigung des ersten Abschnitts bezüglich einer Ebene senkrecht zur Kolbenachse geringer ist als die Neigung des zweiten Abschnitts bezüglich einer Ebene senkrecht zur Kolbenachse.

Insbesondere wird derzeit für die Neigung des ersten Abschnitts nach außen ein Winkel zu einer gedachten Ebene senkrecht zur Kolbenbolzenachse von weniger als 15°, insbesondere weniger als 13° und besonders bevorzugt etwa 9° bevorzugt.

Um die unvermeidlichen Spannungsspitzen besonders gering zu halten, wird für die Krümmung zwischen dem ersten und dem zweiten Abschnitt bevorzugt, dass diese deutlich kürzer ist als der erste Abschnitt. Insbesondere werden gute Ergebnisse für eine Gestaltung erwartet, bei welcher die Bogenlänge der Krümmung weniger als 75%, insbesondere weniger als 65% und besonders bevorzugt etwa 64% der Länge des ersten Abschnitts beträgt.

Wenngleich dies für die Erreichung der erfindungsgemäßen Vorteile wenig Einfluss hat, wird für die Außenseite zumindest einer Kastenwand bevorzugt, dass sie ggf. mit Ausnahme einer Verbreiterung im Bereich der Anbindung an die Schaftwand entsprechend der Innenseite gestaltet ist, mit anderen Worten eine im Wesentlichen konstante Dicke aufweist und/oder ebenso die beiden oben beschriebenen weitgehend geraden Abschnitte mit der vergleichsweise kurzen Krümmung dazwischen aufweist. Wie erwähnt gilt die beschriebene Gestaltung an Innen- und Außenseite zumindest für den unteren Rand zumindest einer, bevorzugt beider Schaftwände auf der Druckseite. Die Schaftwände können in ihren weiteren Verlauf in Richtung der Kolbenhubachse entsprechend gestaltet sein und insbesondere zumindest abschnittsweise weitgehend parallel zur Kolbenhubachse verlaufen.

Wie aus dem Vorangehenden bereits deutlich wird, entfaltet der erfindungsgemäße Kolben besondere Vorteile im Zusammenhang mit einer im Kolbengehäuse eines Motors vorgesehenen Kühlöldüse, so dass für den Kolben bevorzugt wird, dass er zumindest einen Kühlkanal aufweist, wenngleich es ebenso denkbar ist, dass die Kühlöldüse nicht einen Kühlkanal, sondern lediglich die Kolbenunterseite mit Kühlöl beaufschlagt.

Ferner wird der erfindungsgemäße Kolben bevorzugt als Ottomotorkolben eingesetzt.

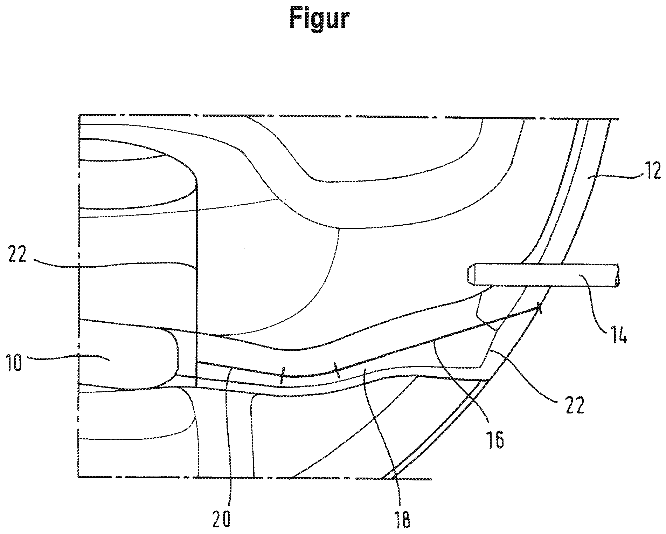

### Kurze Beschreibung der Zeichnung

Nachfolgend wird die Erfindung anhand einer in der Zeichnung dargestellten Ausführungsform näher erläutert.

Die Figur zeigt eine teilweise Unteransicht eines erfindungsgemäßen Kolbens mit einer Kühlöldüse.

### Ausführliche Beschreibung einer bevorzugten Ausführungsform der Erfindung

In der Figur ist in einer Unteransicht etwa ein "Viertel" eines erfindungsgemäßen Kolbens mit einer Kolbenbolzennabe 10 und einer druckseitigen Schaftwand 12 gezeigt. Ferner ist eine Kühlöldüse 14 angedeutet. Mit 16 ist eine Linie eingetragen, die im Hinblick auf eine homogene Spannungsverteilung in der Verbindungs- oder Kastenwand 18 zwischen der Kolbenbolzennabe 10 und der Schaftwand 12 optimal wäre. Wie insbesondere anhand einer gedachten Verlängerungder Linie 16 in der Figur nach links bis zu der Kolbenbolzennabe 10 zu erkennen, würde dies jedoch dann, wenn ausreichend Raum für die Kühlöldüse 14 geschaffen wird, die Kolbenbolzennabe vergleichsweise weit nach außen, d.h. in der Figur nach unten rücken, was im Hinblick auf die notwendige Kolbenbolzenlänge und das Kolbengewicht nachteilig wäre.

Dem wird erfindungsgemäß dadurch Rechnung getragen, dass die Kastenwand gemäß der Linie 20 in einem ersten Abschnitt weitgehend gerade und zumindest geringfügig nach außen geneigt verläuft. Dies bedeutet, dass sie sich nicht senkrecht zu der Kolbenbolzenachse (in der Figur von oben nach unten verlaufend) erstreckt, sondern sich ihr Abstand von einer Ebene senkrecht zur Kolbenbolzenachse, die in der Figur von links nach rechts verlaufend erkennbar wäre, vergrößert, je weiter sich die Linie 20 von der Kolbenbolzennabe 10 entfernt und sich der Schaftwand 12 annähert. Hierbei beginnt die Linie 20 im Hinblick auf ihr bevorzugtes Abmessungsverhältnis bezüglich der Linie 16, wie oben beschrieben, an der Projektion der Innenfläche der Bolzennabe 10, als Linie 22 eingetragen.

Anschließend an einen in der Figur insbesondere an der Innenseite der Kastenwand 18 erkennbaren, vergleichsweise kurzen gekrümmten und tangentenstetigen Übergang, verläuft die Kastenwand entsprechend der "idealen" Linie 16 nach innen geneigt, so dass sich ihr Abstand zu einer Ebene senkrecht zur Kolbenachse mit Verlauf in Richtung der Schaftwand 12 verringert. Demnach bildet der Bereich der Linie 16 zwischen dem Ende der Krümmung und der Schaftwand 12 den oben beschriebenen zweiten Abschnitt, und die eingezeichnete Linie 20 bildet den ersten Abschnitt.

In der Figur sind ferner die oben beschriebenen Maßnahmen erkennbar, wonach die Neigung des ersten Abschnitts 20 geringer ist als diejenige des zweiten Abschnitts 16, und die Bogenlänge der Krümmung deutlich kürzer ist als der erste Abschnitt 20, und letzterer deutlich kürzer ist als der zweite Abschnitt 16. Es sei erwähnt, dass die Form der Verbindungswand mit den beiden beschriebenen, weitgehend geraden Abschnitten und der Krümmung dazwischen auch als "Bumerang" bezeichnet werden kann. Ferner ist in der Figur zu erkennen, dass die Außenseite der Verbindungs- oder Kastenwand 18 (in der Figur unten) weitgehend mit dem Verlauf an der Innenseite übereinstimmt, wobei im Bereich der Anbindung an die Schaftwand 12 eine Verbreiterung 22 vorgesehen ist.

## Patentansprüche

1. Kolben für einen Verbrennungsmotor mit Kastenwänden (18), die jeweils zwischen Schaftwänden (12) und Kolbenbolzennaben (10) ausgebildet sind, wobei zumindest eine Kastenwand (18) auf einer Druckseite zumindest am unteren Rand und zumindest an der Innenseite von der Kolbenbolzennabe (10) ausgehend in einem ersten Abschnitt (20) weitgehend gerade nach außen geneigt, anschließend nach innen gekrümmt und dann in einem zweiten Abschnitt (16) zu der Schaftwand (12) weitgehend gerade nach innen geneigt verläuft, **dadurch gekennzeichnet, dass** die Neigung des zweiten Abschnitts (16) bezüglich einer Ebene senkrecht zur Kolbenbolzenachse 10 bis 25°, bevorzugt 15° bis 20° beträgt, und der zweite Abschnitt (16) länger ist als der erste Abschnitt (20), insbesondere 2,0 bis 3,0 und besonders bevorzugt 2,3 bis 2,7 mal so lang.

2. Kolben nach Anspruch 1, **dadurch gekennzeichnet, dass** die Neigung des ersten Abschnitts (20) bezüglich einer Ebene senkrecht zur Kolbenbolzenachse geringer ist als die Neigung des zweiten Abschnitts (16) bezüglich einer Ebene senkrecht zur Kolbenbolzenachse.

3. Kolben nach Anspruch 1 oder 2, **dadurch gekennzeichnet, dass** die Neigung des ersten Abschnitts (20) bezüglich einer Ebene senkrecht zur Kolbenbolzenachse weniger als 15°, bevorzugt weniger als 13° beträgt.

4. Kolben nach einem der vorangehenden Ansprüche, **dadurch gekennzeichnet, dass** die Krümmung kürzer ist als der erste Abschnitt (20), insbesondere eine Bogenlänge aufweist, die weniger als 75%, bevorzugt weniger als 65% der Länge des ersten Abschnitts (20) beträgt.

5. Kolben nach einem der vorangehenden Ansprüche, **dadurch gekennzeichnet, dass** die Außenseite zumindest einer Kastenwand, optional mit Ausnahme einer Verbreiterung (22) im Bereich der Anbindung an die Schaftwand (12), entsprechend der Innenseite verläuft.

6. Kolben nach einem der vorangehenden Ansprüche, **dadurch gekennzeichnet, dass** dieser einen Kühlkanal aufweist.

7. Kolben nach einem der vorangehenden Ansprüche, **dadurch gekennzeichnet, dass** dieser ein Ottomotorkolben ist.

8. Kombination eines Kolbens nach einem der vorangehenden Ansprüche mit einer Kühlöldüse (14), die bevorzugt im Bereich des zweiten Abschnitts (16), insbesondere in einem mittleren Bereich im Verlauf desselben vorgesehen ist.

## Claims

1. Piston for an internal combustion engine with side reliefs (18) which are in each case formed between shaft walls (12) and piston pin bushings (10), wherein at least one side relief (18) is, on a pressure side, at least at the lower edge and at least on the inner side, starting out from the piston pin bushing (10), inclined outwards in a largely straight line in a first section (20), then curves inwards and then, in a second section (16), runs to the shaft wall (12) inclined inwards in a largely straight line, **characterised in that** the inclination of the second section (16) with respect to a plane perpendicular to the piston pin axis is 10 to 25°, preferably 15° to 20°, and the second section (16) is longer than the first section (20), in particular 2.0 to 3.0 and especially preferably 2.3 to 2.7 times as long.

2. Piston according to claim 1, **characterised in that** the inclination of the first section (20) with respect to a plane perpendicular to the piston pin axis is less than the inclination of the second section (16) with respect to a plane perpendicular to the piston pin axis.

3. Piston according to claim 1 or 2, **characterised in that** the inclination of the first section (20) with respect to a plane perpendicular to the piston pin axis is less than 15°, preferably less than 13°.

4. Piston according to one of the preceding claims, **characterised in that** the curve is shorter than the first section (20), in particular having an arc length which is less than 75%, preferably less than 65% of the length of the first section (20).

5. Piston according to one one of the preceding claims, **characterised in that** the outer side of at least one side relief, optionally with the exception of a widening (22) in the region of the connection to the shaft wall (12), runs parallel to the inner side.

6. Piston according to one of the preceding claims, **characterised in that** it has a cooling channel.

7. Piston according to one of the preceding claims, **characterised in that** it is a petrol engine piston.

8. Combination of a piston according to one one of the preceding claims with a cooling oil nozzle (14) which is preferably provided in the region of the second section (16), in particular in a middle region along the course thereof.

## Revendications

1. Piston pour un moteur à combustion interne comprenant des parois en caisson (18) qui sont chacune formées entre des parois de tige (12) et des moyeux d'axe de piston (10), au moins une paroi en caisson (18) s'étendant sur un côté de pression, au moins sur le bord inférieur et au moins sur le côté intérieur en partant du moyeu d'axe de piston (10), en une première partie (20) en grande partie droite vers l'extérieur, puis courbée vers l'intérieur, et ensuite en une deuxième partie (16) en grande partie droite vers l'intérieur par rapport à la paroi de tige (12), **caractérisé en ce que** l'inclinaison de la deuxième partie (16) par rapport à un plan perpendiculaire à l'axe d'axe de piston est de 10 à 25°, de préférence de 15° à 20°, et la deuxième partie (16) est plus longue que la première partie (20), en particulier de 2,0 à 3,0 fois plus longue, et, de façon particulièrement préférée, de 2,3 à 2,7 fois plus longue.

2. Piston selon la revendication 1, **caractérisé en ce que** l'inclinaison de la première partie (20) par rapport à un plan perpendiculaire à l'axe d'axe de piston est inférieure à l'inclinaison de la deuxième partie (16) par rapport à un plan perpendiculaire à l'axe d'axe de piston.

3. Piston selon la revendication 1 ou la revendication 2, **caractérisé en ce que** l'inclinaison de la première partie (20) par rapport à un plan perpendiculaire à l'axe d'axe de piston est inférieure à 15°, de préférence inférieure à 13°.

4. Piston selon l'une quelconque des revendications précédentes, **caractérisé en ce que** la courbure est plus courte que la première partie (20), présente notamment une longueur d'arc inférieure à 75 %, de préférence inférieure à 65 % de la longueur de la première partie (20).

5. Piston selon l'une quelconque des revendications précédentes, **caractérisé en ce que** le côté extérieur d'au moins une paroi en caisson, facultativement à l'exclusion d'un élargissement (22) dans la zone de la liaison à la paroi de tige (12), s'étend selon le côté intérieur.

6. Piston selon l'une quelconque des revendications précédentes, **caractérisé en ce qu'**il présente un canal de refroidissement.

7. Piston selon l'une quelconque des revendications précédentes, **caractérisé en ce qu'**il s'agit d'un piston de moteur à allumage par étincelle.

8. Combinaison d'un piston selon l'une quelconque des revendications précédentes avec une buse d'huile de refroidissement (14), qui est prévue de préférence dans la zone de la deuxième partie (16), en particulier dans une zone centrale de celle-ci.
